**Europäisches Patentamt**

**European Patent Office**

**Office européen des brevets**

(11) Numéro de publication : **0 293 287 B1**

(12) # FASCICULE DE BREVET EUROPEEN

(45) Date de publication du fascicule du brevet :
**06.05.92 Bulletin 92/19**

(51) Int. Cl.$^5$ : **H04K 3/00, H04B 1/66**

(21) Numéro de dépôt : **88401230.3**

(22) Date de dépôt : **20.05.88**

(54) **Dispositif de test pour un démodulateur de phase à spectre étalé.**

(30) Priorité : **26.05.87 FR 8707418**

(43) Date de publication de la demande :
**30.11.88 Bulletin 88/48**

(45) Mention de la délivrance du brevet :
**06.05.92 Bulletin 92/19**

(84) Etats contractants désignés :
**DE GB IT**

(56) Documents cités :
**FR-A- 2 317 823**
**US-A- 4 206 462**
**IEEE JOURNAL ON SELECTED AREAS IN
COMMUNICATIONS, vol. SAC-3, no. 5, septembre 1985, pages 676-686, IEEE, New York,
US; G.J.SAULNIER et al.: "An adaptive digital
suppression filter for direct-sequence
spread-spectrum communications"**

(73) Titulaire : **THOMSON-CSF
51, Esplanade du Général de Gaulle
F-92800 Puteaux (FR)**

(72) Inventeur : **Prigent, Jean-Paul
THOMSON-CSF SCPI 19, Avenue de Messine
F-75008 Paris (FR)**
Inventeur : **Desesquelles, Valérie
THOMSON-CSF SCPI 19, Avenue de Messine
F-75008 Paris (FR)**

(74) Mandataire : **Sciaux, Edmond et al
THOMSON-CSF SCPI
F-92045 PARIS LA DEFENSE CEDEX 67 (FR)**

## Description

L'invention concerne un dispositif de test pour un démodulateur de phase à spectre étalé. Un tel démodulateur est utilisé dans des systèmes de transmission de données par faisceaux hertziens ou satellites et dans des systèmes de radiotéléphonie, protégés contre une interception ou un brouillage, par le procédé d'étalement de spectre. Un tel dispositif est décrit US-A-4 206 462. Ce procédé consiste à étaler le spectre d'un signal binaire, constitué par exemple d'un signal vocal numérisé, en appliquant ce signal binaire à une première entrée d'une porte logique OU exclusif et en appliquant un signal binaire pseudo-aléatoire à une seconde entrée de cette porte. Le signal fourni par la sortie de la porte a un spectre beaucoup plus large que celui du signal binaire d'origine, si le rythme du signal binaire pseudo-aléatoire est beaucoup plus élevé que celui du signal binaire d'origine. Le signal résultant est utilisé ensuite pour moduler une onde porteuse par des sauts de phase de 0° ou de 180°. Après sa réception, ce signal est démodulé dans un démodulateur de phase à spectre étalé, qui réalise à la fois une compression du spectre et une démodulation de phase pour restituer le signal binaire d'origine.

Il est nécessaire de tester périodiquement un tel démodulateur pour vérifier son bon fonctionnement et pour faire certains réglages. Ce test consiste essentiellement à injecter à l'entrée du démodulateur une onde porteuse modulée en phase par une suite de valeurs binaires connues et ayant un spectre étalé, additionnée à un signal de bruit analogue au bruit thermique qui est, en service normal, superposé au signal utile par tous les éléments du système transmission, situés en amont du démodulateur. Ces signaux permettent ainsi de tester le démodulateur indépendamment des éléments situés en amont, tout en reconstituant le bruit thermique créé par ces éléments. La présence de ce bruit thermique joue un rôle très important dans le fonctionnement du démodulateur. Il détermine certains réglages de seuil car la probabilité de bonne détection du signal binaire et le taux de fausse alarme sont fonctions du niveau de bruit.

Il est connu de produire le signal de bruit au moyen d'un générateur de bruit, indépendant du démodulateur. Un premier type de générateur de bruit classiquement utilisé dans cette application comporte une diode à bruit et un amplificateur à grand gain pour amplifier le signal de bruit fourni par la diode. Cet amplificateur est constitué de plusieurs étages dont la réalisation est délicate à cause du grand gain qui est nécessaire et à cause des fréquences de travail élevées du démodulateur de phase à spectre étalé. Dans un exemple de réalisation, cet amplificateur doit avoir un gain de 89 dB et une bande passante de 50 à 90 MHz correspondant à la bande passante du démodulateur à tester.

Il est connu aussi de réaliser un générateur de bruit au moyen d'un générateur de signal binaire pseudo-aléatoire ayant une très grande pseudo-période. Ce type de générateur peut avantageusement remplacer un générateur de signal de bruit thermique dans le cas où la bande de fréquences à couvrir correspond à une faible partie du spectre du signal fourni par ce générateur et si cette partie est dans une zone du spectre où l'énergie est relativement importante et uniformément répartie.

En général, une transposition de fréquence est réalisée pour que la partie du spectre du signal pseudo-aléatoire tombant dans la bande passante du démodulateur à tester ait une énergie suffisante. En outre, pour que cette partie de spectre ait une énergie répartie uniformément, comme celle d'un bruit thermique, il est nécessaire que l'aléas soit de très bonne qualité, c'est-à-dire que la pseudo-période du signal binaire soit très grande, sinon le spectre est constitué de raies discontinues.

Un générateur de signal binaire pseudo-aléatoire est constitué classiquement d'un registre à décalage ayant un grand nombre d'étages dont certaines sorties parallèles sont rebouclées sur une entrée série du registre par l'intermédiaire de portes logiques ou par l'intermédiaire d'une mémoire. La réalisation d'un tel générateur ayant une très grande pseudo-période est complexe et délicate.

La réalisation d'un dispositif de test associé en permanence à un démodulateur pour le tester périodiquement est donc délicate et coûteuse à cause des difficultés de réalisation d'un générateur de bruit.

Le but de l'invention est de réaliser un dispositif de test pour un démodulateur de phase à spectre étalé, dont la réalisation soit plus simple et moins coûteuse que celle des dispositifs de test classiques. L'objet de l'invention est un dispositif de test comportant un générateur de bruit constitué par le générateur de signal binaire pseudo-aléatoire que comporte classiquement tout démodulateur de phase à spectre étalé, le signal binaire pseudo-aléatoire fourni par ce générateur étant appliqué en un point judicieusement choisi dans le démodulateur pour permettre au générateur de signal pseudo-aléatoire de remplir simultanément sa fonction habituelle, c'est-à-dire la compression du spectre d'un signal à spectre étalé, appliqué à l'entrée du démodulateur.

Selon l'invention, un dispositif de test pour un démodulateur de phase à spectre étalé, ce démodulateur comportant un premier et un second mélangeur de fréquences, un oscillateur local, et un générateur de signal binaire pseudo-aléatoire, pour comprimer le spectre d'un signal à démoduler ; est caractérisé en ce qu'il comporte un générateur de bruit constitué par le générateur de signal binaire pseudo-aléatoire du démodulateur.

L'invention sera mieux comprise et d'autres détails apparaîtront à l'aide de la description ci-dessus et des figures l'accompagnant :

    – la figure 1 représente le schéma synoptique d'un exemple de réalisation d'un dispositif de test conformément à l'art antérieur ;

    – la figure 2 représente un premier exemple de réalisation d'un dispositif de test selon l'invention ;

    – la figure 3 représente une variante de ce premier exemple de réalisation ;

    – la figure 4 représente un troisième exemple de réalisation du dispositif de test selon l'invention ;

    – la figure 5 représente une variante de ce second exemple de réalisation ;

    – la figure 6 représente un schéma synoptique plus détaillé de moyens de couplage utilisés dans ces exemples de réalisation.

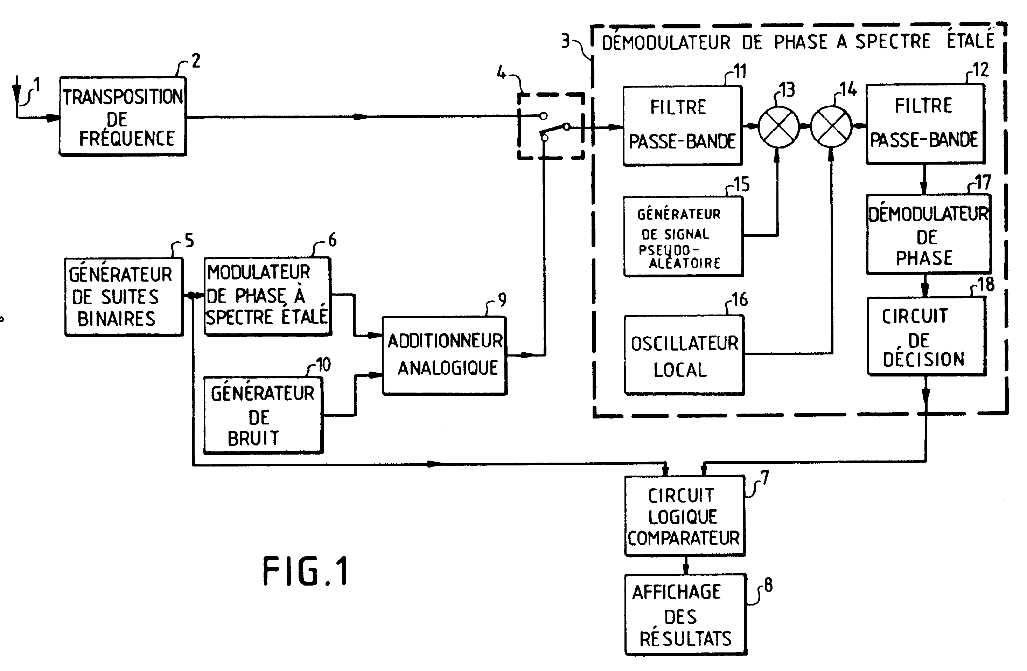

L'exemple de réalisation représenté sur la figure 1 est conforme à l'art antérieur. Un démodulateur de phase à spectre étalé, 3, a une entrée reliée à un inverseur 4 permettant d'appliquer à cette entrée : soit un signal utile fourni par la sortie d'un dispositif 2 réalisant essentiellement une transposition de fréquence sur un signal transmis par un faisceau hertzien et reçu par une antenne 1 ; soit un signal de test fourni par la sortie d'un additionneur analogique 9.

L'additionneur 9 reçoit, sur une première entrée, un signal de bruit fourni par un générateur de bruit 10, classique et indépendant du démodulateur 3 ; et il reçoit, sur une seconde entrée, un signal calibré fourni par une sortie d'un modulateur de phase à spectre étalé, 6. Le modulateur 6 est en général constitué par un modulateur associé au démodulateur 3 pour réaliser une transmission bidirectionnelle. Un générateur de suites binaires, 5, fournit un signal binaire constitué d'une suite de valeurs parfaitement connue et qui peut être périodique. Cette suite de valeurs est appliquée, d'une part, à une entrée du modulateur 6 et, d'autre part, à une entrée d'un circuit logique comparateur 7. Une autre entrée du circuit 7 reçoit un signal binaire fourni par la sortie du démodulateur 3.

Le circuit 7 compare la suite binaire fournie par le générateur 5 et la suite binaire restituée par le démodulateur 3, détermine le taux d'erreurs sur la suite restituée, et fournit la valeur de ce taux à un dispositif d'affichage 8 pour afficher les résultats du test.

La figure 1 représente aussi un schéma synoptique d'un exemple de réalisation du démodulateur de phase à spectre étalé, 3. Cet exemple comporte : deux filtres passe-bande, 11 et 12 ; deux mélangeurs de fréquences, 13 et 14 ; un générateur 15 de signal binaire pseudo-aléatoire ; un oscillateur local 16 ; un démodulateur de phase 17 ; et un circuit de décision 18. Dans cet exemple, le filtre passe-bande 11 a une bande passante de 50 à 90 MHz et le filtre 12 a une bande passante de 1 KHz centrée sur la fréquence de 100 KHz. Le filtre 11 a une entrée qui constitue l'entrée du démodulateur 3 et une sortie qui est reliée à une première entrée du mélangeur de fréquences 13. Une seconde entrée du mélangeur 13 est reliée à une sortie du générateur 15 de signal binaire pseudo-aléatoire. Le mélangeur 13 a pour fonction de multiplier le signal à spectre étalé par le signal fourni par le générateur 15 afin de comprimer le spectre étalé. Le générateur 15 fournit un signal constitué d'une suite binaire pseudo-aléatoire identique et en phase avec une suite binaire pseudo-aléatoire utilisée dans le modulateur 6 pour réaliser l'étalement du spectre. Les moyens de synchronisation du générateur 15 sont classiques et ne sont pas représentés.

Une sortie du mélangeur 13 est reliée à une première entrée du mélangeur 14. Une seconde entrée du mélangeur 14 est reliée à une sortie de l'oscillateur local 16 qui fournit un signal de fréquence constante permettant de transposer à 100 KHz la fréquence porteuse du signal fourni par le mélangeur 13. Une sortie du mélangeur 14 est reliée à une entrée du filtre passe-bande 12 pour filtrer le signal fourni par le mélangeur 14, au voisinage de la fréquence porteuse de 100KHz. Une sortie du filtre 12 est reliée à une entrée du démodulateur de phase 17 qui est un démodulateur de phase classique.

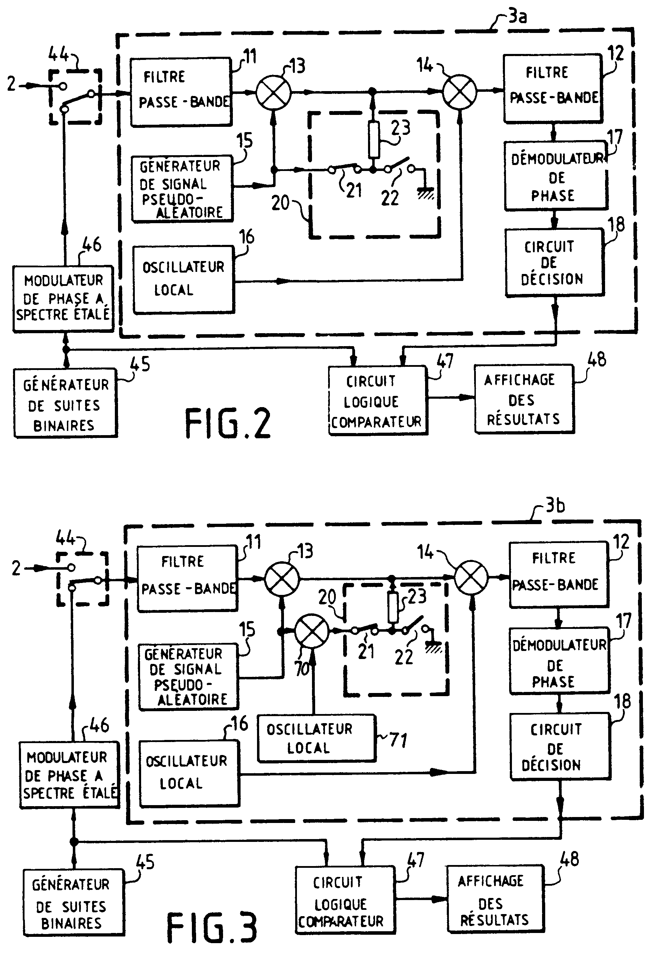

Une sortie du démodulateur de phase 17 est reliée à une entrée du circuit de décision 18. Elle lui fournit un signal démodulé analogique. Le circuit 18 fournit un signal binaire en fonction de la valeur du signal analogique que lui fournit le démodulateur 17 et en fonction d'une valeur de seuil réglable. Cette valeur de seuil est réglable notamment en fonction du niveau de bruit affectant le signal utile. L'oscillateur local 16 est asservi à la fréquence porteuse du signal utile appliqué à l'entrée du démodulateur 3, par un dispositif d'asservissement de type classique, non représenté sur la figure 3. Le générateur 15 de signal binaire pseudo-aléatoire est de type classique. Il est identique à celui du modulateur 6 et il fournit un signal ayant une très grande pseudo-période. Cette grande pseudo-période rend ce signal pratiquement impossible à reproduire par un ennemi éventuel cherchant à intercepter ou à brouiller la transmission.

La figure 2 représente le schéma synoptique d'un dispositif de test selon l'invention, dans lequel le générateur 15 joue à la fois son rôle habituel pour la compression de spectre et le rôle de générateur de bruit pour le test. Dans cet exemple de réalisation, le démodulateur de phase à spectre étalé, 3a, comporte des moyens de couplage 20 en plus des éléments constituant le démodulateur 3 décrit précédemment. Le dispositif de test ne comporte plus de générateur de bruit 10 et d'additionneur analogique 9. L'entrée du démodulateur 3a est reliée à un inverseur 44 permettant de transmettre : soit un signal fourni par un dispositif 2 de transposition de fréquence ; soit de transmettre un signal de test fourni par une sortie d'un modulateur de phase à spectre étalé, 46. Un générateur de suites binaires, 45, possède une sortie reliée à une entrée du modulateur 46 et à une première entrée d'un circuit logique comparateur 47. Il fournit des suites binaires connues permettant de constituer un signal de test. Une seconde entrée du circuit 47 est reliée à la sortie du démodulateur 3a. Une sortie du circuit logique comparateur 47 est reliée à une entrée d'un dispositif 48 d'affichage des résultats du test. Le générateur 45, le circuit 47 et le dispositif 48 sont analogues respectivement au générateur 5, au circuit 7 et au dispositif 8 du dispositif de test selon l'art antérieur.

Dans cet exemple de réalisation les moyens de couplage 20 possèdent une entrée reliée à la sortie du générateur 15 de signal pseudo-aléatoire et possèdent une sortie reliée au point commun à la sortie du mélangeur 13 et à la première entrée du mélangeur 14. Les moyens 20 permettent d'additionner au signal fourni par la sortie du mélangeur 13 un signal de bruit constitué par une fraction du signal binaire fourni par le générateur 15. Sur la première entrée du mélangeur 14 le signal utile a une fréquence porteuse de 70 MHz et une largeur de bande de 1 KHz. Le signal de bruit est donc constitué par la partie du spectre du signal binaire pseudo-aléatoire située dans une bande de 1 KHz autour de la fréquence de 70 MHz. Dans cet exemple, la structure du générateur 15 est telle que cette partie du spectre a une énergie suffisante pour constituer le signal de bruit nécessaire au test.

Les moyens de couplage 20 sont constitués de deux dispositifs de commutation 21 et 22 et d'un élément 23 permettant de doser l'énergie du signal de bruit injecté. L'élément 23 peut être un élément réactif ou une résistance pure. Le dispositif de commutation 21 permet de relier l'entrée des moyens 20 à une première borne de l'élément 23. La seconde borne de l'élément 23 constitue la sortie des moyens 20. Le dispositif de commutation 22 permet de relier à un potentiel de référence la première borne de l'élément 23. Pendant le test, le dispositif 21 est fermé pour transmettre le signal de bruit vers la sortie des moyens 20, et le dispositif 22 est ouvert. Pendant le fonctionnement normal du démodulateur, le dispositif 21 est ouvert pour supprimer la transmission du signal de bruit et le dispositif 22 est fermé pour annuler complètement tout signal de bruit résiduel qui pourrait traverser le dispositif 21 et perturber le fonctionnement normal du démodulateur 3a.

Pour un bon fonctionnement de cet exemple de réalisation, il est nécessaire que le spectre du signal binaire pseudo-aléatoire fourni par le générateur 15 possède une énergie suffisante dans une bande de largeur 1 KHz centrée sur 70 MHz. La répartition de ce spectre dépend de la structure du générateur 15. Dans certains cas cette fréquence peut tomber malencontreusement entre deux lobes du spectre de ce signal. Dans ce cas, il est nécessaire de transposer les fréquences du signal injecté par les moyens de couplage 20, afin que la fréquence de 70 MHz tombe dans une zone du spectre transposé où l'énergie est suffisante pour constituer le signal de bruit nécessaire au test.

La figure 3 représente le schéma synoptique d'une variante de réalisation de l'exemple représenté sur la figure 2, dans laquelle le dispositif de test comporte en outre un mélangeur de fréquences 70 et un oscillateur local 71, incorporés au démodulateur, référencé 3b, pour réaliser la transposition de fréquence mentionnée précédemment.

Le mélangeur 70 possède une première entrée reliée à la sortie du générateur 15, une seconde entrée reliée à une sortie de l'oscillateur 71, et une sortie reliée à l'entrée des moyens de couplage 20. Les autres éléments du démodulateur et du dispositif de test sont inchangés. L'oscillateur 71 fournit un signal de fréquence constante qui est choisie en fonction du spectre du signal binaire pseudo-aléatoire fourni par le générateur 15 et en fonction de la valeur de la fréquence porteuse fournie par la sortie du mélangeur 13. Le spectre du signal fourni par le générateur 15 peut être déterminé par des calculs théoriques ou peut être déterminé au moyen d'un analyseur de phase. La valeur de la fréquence de l'oscillateur 71 est ensuite calculée à partir des caractéristiques de ce spectre et de la fréquence centrale du filtre 12. Ce calcul est à la portée de l'homme de l'Art.

Les mélangeurs de fréquences 13, 14, 70 peuvent être constitués par des mélangeurs en anneaux, dont la réalisation est classique.

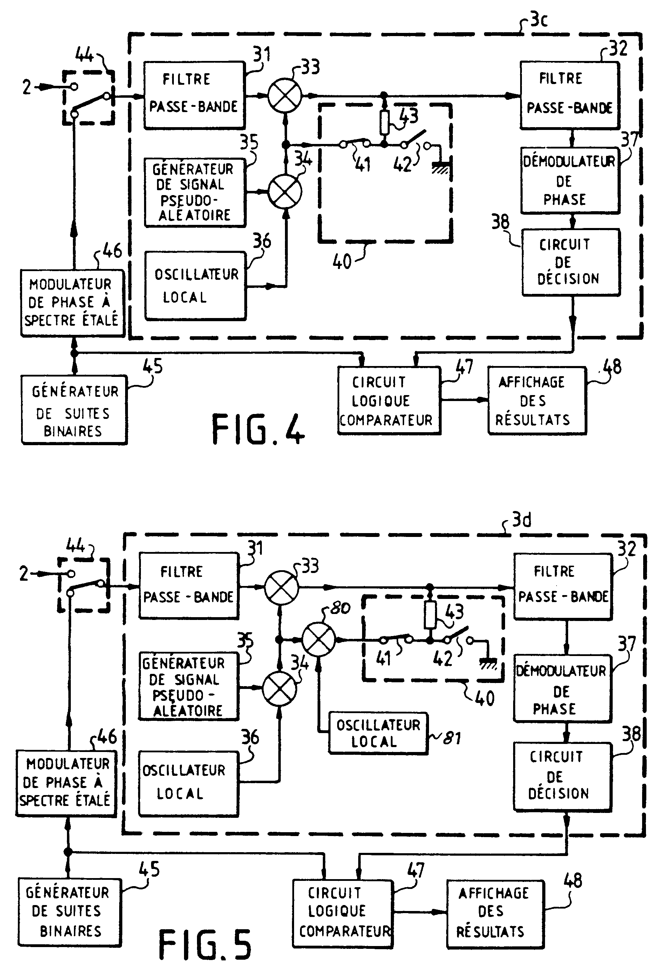

La figure 4 représente un troisième exemple de réalisation du dispositif de test selon l'invention, correspondant à un second mode de réalisation classique d'un démodulateur de phase à spectre étalé. Ce démodulateur de phase, référencé 3c, comporte : deux filtres passe-bande 31 et 32 ; deux mélangeurs de fréquences, 33 et 34 ; un générateur 35 de signal binaire pseudo-aléatoire ; un oscillateur local 36 ; un démodulateur de phase 37 ; et un circuit de décision 38. Pour utiliser le générateur 35 comme générateur de signal de bruit, des moyens de couplage 40 sont incorporés au démodulateur 3c. Les éléments constituant le démodulateur 3c sont analogues à ceux constituant les démodulateurs 3a et 3b des exemples de réalisation précédents, mais les mélangeurs de fréquences 33 et 34 sont reliés différemment et jouent des rôles légèrement différents.

Le filtre passe-bande 31 a une bande passante de 50 à 90 MHz. Une entrée du filtre passe-bande 31 constitue l'entrée du démodulateur 3c. Une première entrée du mélangeur 33 est reliée à la sortie du filtre passe-bande 31. Une seconde entrée du mélangeur 33 est reliée à une sortie du mélangeur 34. Une sortie du mélangeur 33 est reliée à une entrée du filtre passe-bande 32. Une première et une seconde entrée du mélangeur 34 sont reliées respectivement à une sortie du générateur 35 et à une sortie de l'oscillateur 36.

Les moyens de couplage 40 sont analogues aux moyens de couplage 20 du premier exemple de réalisation. Ils comportent une entrée reliée à la sortie du mélangeur 34 et une sortie reliée au point commun de la sortie du mélangeur 33 et de l'entrée du filtre 32. Le mélangeur 34 a pour rôle de faire le produit du signal fourni par l'oscillateur local 36 et du signal binaire pseudo-aléatoire fourni par le générateur 35. Le signal fourni par l'oscillateur 36 a donc un spectre qui est étalé par le signal pseudo-aléatoire. Le mélangeur 33 réalise une transposition de la fréquence du signal appliqué à l'entrée du démodulateur et réalise une compression de son spectre, pour le ramener à une fréquence centrale de 100 KHz et une largeur de bande de 1 KHz.

Le filtre 32 élimine les fréquences indésirables situées hors de cette bande. Puis le démodulateur de phase 37 extrait la modulation de ce signal et fournit un signal démodulé analogique au circuit de décision 38. Le circuit de décision 38 fournit un signal binaire et sa sortie constitue la sortie du démodulateur 3c.

Ce troisième exemple de réalisation comporte en outre : un inverseur 44 ; un générateur 45 de suites binaires ; un modulateur de phase à spectre étalé, 46 ; un circuit logique comparateur 47 ; et une dispositif 48 d'affichage des résultats. Ces éléments sont analogues à ceux portant la même référence dans le premier exemple de réalisation. Dans ce troisième exemple de réalisation, le signal de bruit injecté par les moyens de couplage 40 est constitué par une partie du spectre du signal fourni par le générateur 35, centrée sur la fréquence de 100 KHz et de largeur 1 KHz. Les moyens de couplage 40 comportent : un premier et un second dispositif de commutation, 41 et 42, et un élément réactif 43, respectivement semblables aux dispositifs de commutation 21 et 22, et à l'élément réactif 23, des moyens de couplage 20.

De même que pour le premier exemple de réalisation, il peut arriver que le spectre du signal binaire pseudo-aléatoire ait une énergie insuffisante dans le domaine de fréquences où il faut injecter un signal de bruit. Dans ce cas, il est nécessaire de transposer le signal de bruit avant de l'injecter à l'entrée du filtre 32.

La figure 5 représente un schéma synoptique d'une variante du troisième exemple de réalisation du dispositif de test selon l'invention, variante correspondant au cas où il est nécessaire de transposer les fréquences du signal de bruit injecté à l'entrée du filtre 32. Le schéma diffère du schéma représenté sur la figure 4, par la présence d'un mélangeur supplémentaire 80 et d'un oscillateur local supplémentaire 81. L'entrée des moyens de couplage 40 n'est pas reliée directement à la sortie du mélangeur 34 mais est reliée à une sortie du mélangeur 80. Une première et une seconde entrée du mélangeur 80 sont reliées respectivement à une sortie du mélangeur 34 et à une sortie de l'oscillateur local 81. L'oscillateur 81 fournit un signal de fréquence fixée choisie telle que le signal de bruit à la sortie du mélangeur 80 comporte un spectre d'énergie suffisante pour le test dans le domaine de fréquence centrée sur 100 KHz et dans une bande de largeur 1 KHz.

Le spectre du signal fourni par le générateur 35 peut être déterminé par un calcul théorique ou peut être déterminé au moyen d'un analyseur de spectre. La valeur de la fréquence de l'oscillateur 81 est ensuite calculée à partir des caractéristiques de ce spectre et de la fréquence centrale du filtre 32. Comme dans le premier exemple de réalisation les mélangeurs de fréquences 33, 34, 80 peuvent être des mélangeurs en anneaux, dont la réalisation est classique.

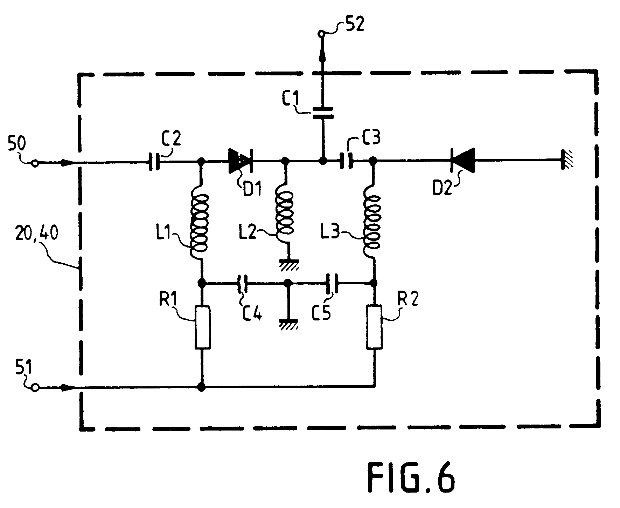

La figure 6 représente le schéma synoptique d'un exemple de réalisation des moyens de couplage 20 ou 40. Ces moyens comportent : une borne d'entrée 50 ; une borne de sortie 52 ; et une borne d'entrée de commande 51. Une capacité C1, correspondant à l'élément réactif référencé 23 et 43 sur les figures précédentes, possède une première borne reliée à la borne de sortie 52 et une seconde borne reliée à la cathode d'une diode D1, à une première borne d'une self d'arrêt L2, et à une première borne d'une capacité C3. L'anode de la diode D1 est reliée à une première borne d'une capacité C2 et à une première borne d'une self d'arrêt L1. Une seconde borne de la capacité C2 est reliée à la borne d'entrée 50. Une seconde borne de la capacité C3 est reliée à la cathode de la diode D2 et à une première borne de la self L3. L'anode de la diode D2 est reliée à un potentiel de référence. La seconde borne de la self L2 est reliée au potentiel de référence.

Une seconde borne de la self L1 est reliée à une première borne d'une résistance R1 et à une première borne d'une capacité C4. Une seconde borne de la self L3 est reliée à une première borne de la capacité C5 et à une première borne d'une résistance R2. Une seconde borne de la capacité C4 et une seconde borne de la capacité C5 sont reliées au potentiel de référence. Une seconde borne de la résistance R1 et une seconde borne de la résistance R2 sont reliées ensemble à la borne d'entrée de commande 51.

Les diodes D1 et D2 constituent les dispositifs de commutation référencés 21, 22 et 41, 42 sur les schémas précédents. Une tension de commande, constituée d'une tension continue positive fixée ou d'une tension continue négative fixée, est appliquée à la borne d'entrée de commande 51. Lorsqu'une tension positive est appliquée à la borne d'entrée de commande 51, la diode D1 est passante alors que la diode D2 est bloquée. La borne d'entrée 50 est donc reliée à la borne de sortie 52 par l'intermédiaire des capacités C2 et C1.

Lorsqu'une tension continue négative est appliquée à la borne d'entrée 51, la diode D1 est bloquée et la diode D2 est passante. La liaison entre la borne d'entrée 50 et la borne de sortie 52 est interrompue par la diode D1 et la seconde borne de la capacité C3 est reliée au potentiel de référence par la diode D2 pour éliminer le signal résiduel transmis par la capacité parasite de la diode D1 bloquée. Le signal transmis à la borne de sortie 52 est donc parfaitement nul.

Les capacités C2, C3, C4, C5 et les selfs d'arrêt L1, L2, L3, et les résistances R1 et R2 ont pour fonction de découpler le circuit à haute fréquence, reliant la borne d'entrée 50, la borne de sortie 52, et le potentiel de référence, par rapport au circuit de commande à courant continu. Le choix des valeurs de ces éléments est à la portée de l'homme de l'art, en fonction de la bande de fréquences du signal de bruit à transmettre entre les bornes 50 et 52. Le choix de la valeur de la capacité C1 détermine l'énergie du signal de bruit injecté, elle est donc déterminée en fonction de l'énergie du bruit à injecter pour réaliser un test. Le signal de commande appliqué à la borne 51 peut commander aussi l'inverseur 44.

L'invention est applicable aux tests de tous les démodulateurs de phase à spectre étalé, notamment ceux utilisés pour des liaisons hertziennes avec des satellites, ou pour des liaisons radiotéléphoniques, ou pour des réseaux locaux de transmission de données mettant en oeuvre le procédé d'accès multiple à répartition par code (A.M.R.C.). Elle permet de réaliser un dispositif de test particulièrement simple et peu coûteux. Si son étalonnage est précis, ce dispositif de test permet de réaliser un réglage très précis des seuils de décision d'accrochage du code reçu au cours de la phase de synchronisation au début de chaque liaison. Ces seuils sont le seuil de fausse alarme et le seuil de détection, du circuit de décision 38 du démodulateur.

Le test peut être automatique et périodique, pendant les périodes de veille du modulateur-démodulateur, afin que le réglage des seuils suive et compense au moins en partie les évolutions de la chaîne de démodulation, notamment les variations de gain en fonction de l'environnement (température). Ceci permet d'obtenir une bonne optimisation de la sensibilité du démodulateur à l'accrochage du code.

## Revendications

1. Dispositif de test pour un démodulateur de phase à spectre étalé, ce démodulateur (3a) comportant un premier et un second mélangeur de fréquences (13, 14), un oscillateur local (16), et un générateur de signal binaire pseudo-aléatoire (15), pour comprimer le spectre d'un signal à démoduler ; caractérisé en ce qu'il comporte un générateur de bruit constitué par le générateur de signal binaire pseudo-aléatoire (15) du démodulateur.

2. Dispositif de test selon la revendication 1, pour un démodulateur (3a) tel que le premier mélangeur (13) multiplie le signal à démoduler par le signal binaire pseudo-aléatoire, et tel que le second mélangeur (14) multiplie le signal fourni par l'oscillateur local (16) par un signal fourni par le premier mélangeur (13) ; caractérisé en ce qu'il comporte des moyens de couplage (20) pour transmettre une fraction du signal binaire pseudo-aléatoire fourni par le générateur (15) et l'additionner au signal que le premier mélangeur (13) fournit au second mélangeur (14).

3. Dispositif de test selon la revendication 1, pour un démodulateur (3c) tel que le premier mélangeur (34) multiplie le signal binaire pseudo-aléatoire par le signal fourni par l'oscillateur local (36) et tel que le second mélangeur (33) multiplie le signal à démoduler, par le signal fourni par le premier mélangeur (34) ; caractérisé en ce qu'il comporte des moyens de couplage (40) pour transmettre une fraction du signal fourni par le premier mélangeur (34) et l'additionner au signal fourni par le second mélangeur (33).

4. Dispositif de test selon l'une des revendications 2 ou 3, caractérisé en ce qu'il comporte en outre un troisième mélangeur de fréquences (70; 80), en série avec des moyens de couplage (20 ; 40) ; et en ce qu'il comporte un oscillateur local (71; 81) fournissant un signal de fréquence fixe au troisième mélangeur de fréquences (70; 80) pour transposer la fréquence du signal transmis par les moyens de couplage (20 ; 40).

5. Dispositif de test selon l'une des revendications 2 à 4, caractérisé en ce que les moyens de couplage (20 ; 40) comportent deux dispositifs de commutation (21, 22 ; 41, 42) l'un étant en série entre une entrée (50) et une sortie (52) des moyens de couplage (20 ; 40) pour permettre l'interruption du passage du signal transmis par les moyens de couplage (20 ; 40), et l'autre étant mis en dérivation vers un potentiel fixe, pour permettre l'élimination de tout signal résiduel transmis par le premier dispositif de commutation (21 ; 41), lorsque le démodulateur n'est pas en cours de test.

## Patentansprüche

1. Testvorrichtung für einen Phasendemodulator mit Spreizspektrum, wobei der Demodulator (3a) einen ersten Frequenzmischer (13) und einen zweiten Frequenzmischer (14), einen örtlichen Oszillator (16) und einen Pseudozufallssignalgenerator (15) aufweist, um das Spektrum eines zu demodulierenden Signals zu komprimieren, dadurch gekennzeichnet, daß die Vorrichtung einen Rauschgenerator enthält, der vom binären Pseudozufallssignalgenerator (15) des Demodulators gebildet wird.

2. Testvorrichtung nach Anspruch 1 für einen Demodulator (3a) der Art, daß der erste Frequenzmischer (13) das zu demodulierende Signal mit dem Pseudozufallsbinärsignal multipliziert und der zweite Mischer (14) das vom örtlichen Oszillator (16) gelieferte Signal mit einem vom ersten Mischer (13) gelieferten Signal multipliziert, dadurch gekennzeichnet, daß die Vorrichtung Koppelmittel (20) aufweist, um einen Bruchteil des vom Pseudozufallssignalgenerator (15) gelieferten binären Pseudozufallssignals zu übertragen und diesen Bruchteil mit dem Signal zu addieren, das der erste Mischer (13) an den zweiten Mischer (14) liefert.

3. Testvorrichtung nach Anspruch 1 für einen Demodulator (3c) der Art, daß der erste Mischer (34) das binäre Pseudozufallssignal mit dem vom örtlichen Oszillator (36) gelieferten Signal multipliziert und daß der zweite Mischer (33) das zu demodulierende Signal mit dem vom ersten Mischer (34) gelieferten Signal multipliziert, dadurch gekennzeichnet, daß die Vorrichtung Koppelmittel (40) enthält, um einen Bruchteil des vom ersten Mischer (34) gelieferten Signals zu übertragen und zu dem vom zweiten Mischer (33) gelieferten Signal hinzuzuaddieren.

4. Testvorrichtung nach einem der Ansprüche 2 oder 3, dadurch gekennzeichnet, daß sie außerdem einen dritten Frequenzmischer (70; 80) in Reihe mit Koppelmitteln (20; 40) aufweist und daß die Vorrichtung einen örtlichen Oszillator (71; 81) besitzt, der ein Signal fester Frequenz an den dritten Frequenzmischer 70; 80) zur Umsetzung der Frequenz des von den Koppelmitteln (20; 40) übertragenen Signals liefert.

5. Testvorrichtung nach einem der Ansprüche 2 bis 4, dadurch gekennzeichnet, daß die Koppelmittel (20; 40) zwei Schaltvorrichtungen (21, 22; 41, 42) aufweisen, von denen die eine in Reihe mit einem Eingang (50) und einen Ausgang (52) der Koppelmittel (20; 40) liegt, um die Unterbrechung des Durchgangs des von den Koppelmitteln (20; 40) übertragenen Signals zu erlauben, während die andere Schaltvorrichtung in einem Querzweig an einem festen Potential liegt, um die Entfernung jedes von denr ersten Schaltvorrichtung (21; 41) übertragenen Restsignals zu erlauben, wenn der Demodulator gerade keinen Test durchführt.

## Claims

1. A test device for a spread spectrum phase demodulator (3a) which comprises a first and a second frequency mixer (13, 14), a local oscillator (16) and a pseudo-random binary signal generator (15) in order to compress the spectrum of a signal to be demodulated, characterized in that it comprises a noise generator constituted by the pseudo-random binary signal generator (15) of the demodulator.

2. A test device according to claim 1 for a demodulator (3a) such that the first mixer (13) multiplies the signal to be demodulated by the pseudo-random binary signal, and that the second mixer (14) multiplies the signal supplied by the local oscillator (16) by a signal supplied by the first mixer (13), characterized in that it comprises coupling means (20) for transmitting a fraction of the pseudo-random binary signal supplied by the generator (15) and for adding it to the signal supplied by the first mixer (13) to the second mixer (14).

3. A test device according to claim 1 for a dempodulator (3c) such that the first mixer (34) multiplies the pseudo-random binary signal by the signal supplied by the local oscillator (36), and that the second mixer (33) multiplies the signal to be demodulated by the signal supplied by the first mxier (34), characterized in that it comprises coupling means (40) for transmitting a fraction of the signal supplied by the first mixer (34) and for adding it to the signal supplied by the second mixer (33).

4. A test device according to one of claims 2 or 3, characterized in that it further comprises a third frequency mixer (70; 80) which is series-connected with coupling means (20; 40), and that it comprises a local oscillator (71; 81) supplying a fixed frequency signal to the third frequency mixer (70; 80) in order to transpose the frequency of the signal transmitted by the coupling means (20; 40).

5. A test device according to one of claims 2 to 4, characterized in that the coupling means (20; 40) comprise two switch devices (21, 22; 41, 42), one being interposed in series between an input (50) and an output (52) of the coupling means (20; 40) in order to allow the interruption of the signal transmitted by the coupling means (20; 40), while the other switch device is a shunt branch towards a fixed potential, for allowing any residual signal transmitted by the first switch device (21; 41) to be eliminated when the demodulator is not performing a test.

DÉMODULATEUR DE PHASE A SPECTRE ÉTALÉ

FILTRE PASSE-BANDE

DÉMODULATEUR DE PHASE

CIRCUIT DE DÉCISION

FILTRE PASSE-BANDE

GÉNÉRATEUR DE SIGNAL PSEUDO-ALÉATOIRE

OSCILLATEUR LOCAL

TRANSPOSITION DE FRÉQUENCE

MODULATEUR DE PHASE A SPECTRE ÉTALÉ

GÉNÉRATEUR DE BRUIT

ADDITIONNEUR ANALOGIQUE

GÉNÉRATEUR DE SUITES BINAIRES

CIRCUIT LOGIQUE COMPARATEUR

AFFICHAGE DES RÉSULTATS

FIG.1

**FIG.2**

**FIG.3**

44

2 →

FILTRE
PASSE-BANDE
31

33

43

41    42

3c

FILTRE
PASSE-BANDE
32

GÉNÉRATEUR
DE SIGNAL
PSEUDO-
ALÉATOIRE
35

34

40

DÉMODULATEUR
DE
PHASE
37

OSCILLATEUR
LOCAL
36

38

CIRCUIT
DE
DÉCISION

MODULATEUR
DE PHASE À
SPECTRE ÉTALÉ
46

GÉNÉRATEUR
DE SUITES
BINAIRES
45

FIG.4

CIRCUIT
LOGIQUE
COMPARATEUR
47

AFFICHAGE
DES
RÉSULTATS
48

44

2 →

FILTRE
PASSE-BANDE
31

33

3d

FILTRE
PASSE-BANDE
32

80

43

41    42

40

GÉNÉRATEUR
DE SIGNAL
PSEUDO-
ALÉATOIRE
35

34

DÉMODULATEUR
DE
PHASE
37

OSCILLATEUR
LOCAL
81

OSCILLATEUR
LOCAL
36

CIRCUIT
DE
DÉCISION
38

MODULATEUR
DE PHASE À
SPECTRE ÉTALÉ
46

GÉNÉRATEUR
DE SUITES
BINAIRES
45

FIG.5

CIRCUIT
LOGIQUE
COMPARATEUR
47

AFFICHAGE
DES
RÉSULTATS
48

FIG.6